Europäisches Patentamt

European Patent Office

Office européen des brevets

(19)

(11) Veröffentlichungsnummer : **0 011 588**
**B1**

(12) # EUROPÄISCHE PATENTSCHRIFT

(45) Veröffentlichungstag der Patentschrift :
**19.05.82**

(51) Int. Cl.³ : **B 67 B 5/00**, B 65 B 7/28, C 09 J 5/02

(21) Anmeldenummer : **79710009.6**

(22) Anmeldetag : **09.11.79**

(54) **Verfahren zum Verschliessen von Behältern aus Glas oder keramischen Werkstoffen mit einer Metallfolie.**

(30) Priorität : **09.11.78 DE 2848568**

(43) Veröffentlichungstag der Anmeldung :
**28.05.80 (Patentblatt 80/11)**

(45) Bekanntmachung des Hinweises auf die Patenterteilung : **19.05.82 Patentblatt 82/20**

(84) Benannte Vertragsstaaten :
**AT BE CH FR GB IT LU NL SE**

(56) Entgegenhaltungen :
**EP - A - 0 001 531**
**DE - B - 2 833 334**
**FR - A - 2 325 677**
**GB - A - 1 454 569**
**US - A - 3 864 892**

**Ullmanns Encyklopädie der technischen Chemie 4. Aufl. Bd 11 Seite 369**

(73) Patentinhaber : **Schweizerische Aluminium AG CH-8212 Neuhausen am Rheinfall (CH)**

(72) Erfinder : **Meyer, Horst, Dipl.-Chem. Dr. D-7705 Steisslingen (DE)**
Erfinder : **Bubeck, Dietrich, Dipl.-Chem. Dr. D-7700 Singen (DE)**
Erfinder : **Keteisen, Arno D-7760 Radolfzell (DE)**
Erfinder : **Scheilhammer, Heinz D-7701 Mühlhausen (DE)**

(74) Vertreter : **Hiebsch, Gerhard F., Dipl.-Ing. Erzbergerstrasse 5A Postfach 464 D-7700 Singen 1 (DE)**

## Verfahren zum Verschließen von Behältern aus Glas oder keramischen Werkstoffen mit einer Metallfolie

Die Erfindung betrifft ein Verfahren zum Verschließen von Behältern aus Glas oder keramischen Werkstoffen mit einer Metall-, insbesondere Aluminiumfolie, die auf der dem Behälter zugekehrten Seite einen Auftrag aus unter Einwirkung von Wärme und Druck aufschmelzenden Kunststoff aufweist.

Es ist bekannt, kunststoffbeschichtete Metallfolien, sogenannte Heißsiegelfolien, zum Verschließen von Kunststoffbechern oder ähnlichen Kunststoffbehältern zu verwenden. Die Folie wird dazu mit ihrer Heißsiegelbeschichtung auf den meist als Flansch ausgebildeten Behälterrand aufgelegt und dort unter Temperatur- und Druckeinwirkung eines Siegelwerkzeuges aufgeschmolzen. Bei richtiger Auswahl der Kunststoffe und Siegelbedingungen schmelzen dabei sowohl die Heißsiegelbeschichtung als auch der Becherrand auf, so daß sich zwischen beiden eine feste, dauerhafte sowie keim- und wasserdichte Siegelnaht ausbildet. Bringt man jedoch die bekannten Heißsiegelfolien nach dem gleichen Verfahren auf Glasbehälter oder Gefäße aus keramischen Werkstoffen auf, so gelingt es zwar, eine zunächst relativ fest haftende Verbindung zwischen dem Gefäßrand und der Heißsiegelfolie herzustellen, diese wird jedoch unter Einwirkung von Wasserdampf und schon verhältnismäßig geringer Wärmezufuhr alsbald undicht, so daß ein keimfreier Verschluß nicht mehr gewährleistet ist und im Behälter etwa abgefüllte Lebensmittel verderben.

Durch die GB-A-1 454 569 ist eine auf eine Behälteröffnung gepreßte Membrane bekannt geworden, die einen teilweisen Überzug aus thermoplastischem Werkstoff aufweist ; dieser bindet in plastifiziertem Zustand die Membrane an den Behälterrand, der dazu seinerseits mit einer Schicht eines härtbaren Harzes als Haftvermittler versehen ist, beispielsweise mit einem Epoxyharz.

Nach der Offenbarung der FR-A-2 325 677 bewirken besonders die Silangruppen eine Haftung an Glasoberflächen.

Angesichts dieser Gegebenheiten liegt der Erfindung die Aufgabe zugrunde, das eingangs genannte Verfahren so zu verbessern und Dauerhaftigkeit sowie Dichtheit der auf dem Behälterrand erzeugten Siegelnaht auch unter dem Einfluß von wasserhaltigen Füllgütern und höheren Temperaturen zu verbessern.

Diese Aufgabe wird erfindungsgemäß dadurch gelöst, daß auf dem Behälterrand eine rein organische oder eine wasserhaltige organische Lösung eines monomeren oder polymeren Titansäureesters aufgebracht wird, der Auftrag getrocknet und anschließend die Verschlußfolie in an sich bekannter Weise durch Aufpressen mit Hilfe eines erwärmten Siegelkopfes auf den Gefäßrand aufgesiegelt wird. Hierzu sollen als Lösungsmittel für den Titansäureester — bevorzugt polymeres Butyltitanat — Benzine verwendet werden.

Das Aufbringen der genannten Lösungen auf den Behälterrand erfolgt zweckmäßigerweise mittels einer Auftragswalze. Es ist aber jede andere Art des Auftrags, beispielsweise durch Tauchen, Sprühen oder Pinseln möglich. Der Auftrag ist lediglich so aufzubringen, daß die für die Siegelnaht vorgesehene Behälterfläche mindestens benetzt wird. Die Trocknung kann bei normaler Raumptemperatur oder unter zusätzlicher luft- und Wärmezufuhr erfolgen.

Das erfingungsgemäße Verfahren eignet sich für vergütete wie für unvergütete Gläser. Es hat sich ferner gezeigt, daß das erfindungsgemäße Verfahren bei der Verwendung von Heißsiegelfolien mit den verschiedensten Beschichtungsmaterialien wirksam ist. Als solche kommen insbesondere Extrusionsbeschichtungen aus Polyäthylen und Polypropylen sowie deren Co-, Pfropf- und Blockpolymerisate in Betracht, ferner Ionomerharze auf der Basis von vernetzten Äthylencopolymeren, Polyester- und Polyamidbeschichtungen ebenso wie Heißsiegellacke, die Bindemittel auf der Basis von PVC, PVCAC, Acrylat, Methacrylat, Polyamid, Polyester, Epoxid- oder Polyurethanverbindungen, gegebenenfalls isocyanatvernetzt, enthalten.

Als besonders vorteilhaft hat es sich erwiesen, das erfindungsgemäße Verfahren mit einem Siegelkopf durchzuführen, dessen Siegelfläche aus elastischem Material besteht. Als besonders geeignet für diesen Zweck hat sich ein wärmeleitfähig eingestellter Silikonkautschuk erwiesen. Zur Erzielung ausreichend hoher Siegeltemperaturen kan es zweckmäßig sein, in das elastische Material des Siegelkopfes ein Heizelement einzubetten.

Auch liegt es im Rahmen der Erfindung, als Verschlußfolie eine mit einem PE-Acrylsäurecopolymeren beschichtete Aluminiumfolie zu verwenden.

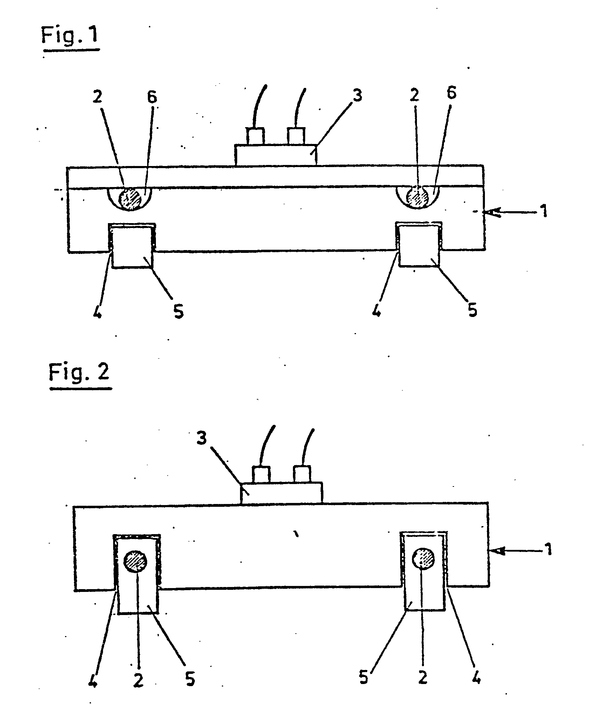

Beispielhafte Ausführungsformen solcher zur Durchführung des erfindungsgemäßen Verfahrens besonders geeigneter scheibenartiger Siegelköpfe sind in den Fig. 1 und 2 der Zeichnung jeweils im Schnitt dargestellt.

Ein Siegelkopf 1 weist nach Fig. 1 Hohlräume 6 auf, in die ein über einen Anschluß 3 mit einer Stromquelle verbundenes elektrisches Heizelement 2 eingelassen ist. In der einer nicht dargestellten Heißluftfolie zugewendeten Unterseite des Siegelkopfes 1 ist eine kreisförmig verlaufende Nut 4 vorgesehen in der ein ringförmiger Streifen 5 aus wärmeleitfähig eingestelltem Silikonkautschuk liegt.

Beim Siegelkopf 1 der Fig. 2 ist das elektrische Heizelement 2 in den Streifen 5 aus wärmeleitfähig eingestelltem Silikonkautschuk eingebettet. Die Verbindung dieses Heizelements 2 mit der Stromquelle erfolgt über den Anschluß 3, von dem nicht näher dargestellte, durch den Siegelkopf und den elastischen Streifen führende Zuleitungen zum Heizelement 2 vorgesehen sind.

**0 011 588**

Die folgenden Beispiele dienen der weiteren Erläuterung der Erfindung.

Beispiel 1 (Vergleich)

Es wurde eine Lösung aus 96 Gewichtsteilen Aceton, 2 Gewichtsteilen Wasser und 2 Gewichtsteilen Aminopropyltriäthoxysilan hergestellt und unter Verwendung einer mit einer saugfähigen Schicht versehenen Walze als dünner Film auf den Rand von 2 Konservengefäßen aus vergütetem Glas aufgebracht. Der Film wurde in einem Ofen eine Minute lang bei 160 °C getrocknet. Diese sowie zwei weitere nicht vorbehandelte Gläser wurden anschließend bis etwa 2 cm unter den Gefäßrand mit Wasser gefüllt und mit einem 0,04 mm dicken, mit einem PE-Acrylsäurecopolymeren beschichteten Aluminiumband belegt. In einer Siegelmaschine, deren Siegelkopf mit einer Siegelfläche aus wärmeleitfähig eingestelltem Silikonkautschuk ausgerüstet war, wurde schließlich bei einer Siegeldauer von 5 Sekunden und einer Siegeltemperatur von 240 °C eine Siegelnaht zwischen der Heißsiegelfolie und dem Gefäßrand hergestellt.

Ein mit Silan und ein ohne Silan versiegeltes Glas wurden sodann mit der Heißsiegelfolie nach unten stehend bei Raumtemperatur gelagert. Während das ohne silan versiegelte Glas bereits nach 5 Tagen Undichtigkeiten zeigte, war das mit silan versiegelte Glas nach 6 Wochen Auslagerung noch einwandfrei dicht.

Die beiden anderen Versuchsgläser wurden mit der Heißsiegelfollie nach oben stehend in einem Wärmeschrank auf 75 °C erwärmt. Hier zeigten sich bereits nach 4 Minuten beim ohne silan versiegelten Glas Undichtigkeiten während das mit silan versiegelte Glas auch nach 45 Minuten noch einwandfrei dicht war.

Beispiel 2

Es wurde eine Lösung aus 98 Gewichtsteilen Benzin (Siedebereich 100-140 °C) und 2 Gewichtsteilen polymeren Butyltitanats hergestellt und durch Eintauchen auf den Rand von 2 Konservengefäßen aus nicht vergütetem Glas aufgebracht. Der Auftrag wurde 1 Minute lang bei 160 °C im Ofen getrocknet. Nach Abkühlung auf Raumtemperatur wurden diese sowie 2 nicht vorbehandelte Vergleichsgefäße wie in Beispiel 1 mit Wasser gefüllt und verseigelt. Bei der anschließenden Auslagerung, die unter den in Beispiel 1 genannten Bedingungen erfolgte, zeigte das herkömmlich versiegelte, bei Raumtemperatur ausgelagerte Gefäß bereits nach 5 Tagen und das herkömmlich versiegelte, bei 75 °C ausgelagerte Gefäß bereits nach 4 Minuten Undichtigkeiten der Siegelnaht. Bei den erfindungsgemäß versiegelten Gefässen waren die Siegelnähte nach 6 Wochen bzw. 45 Minuten immer noch einwandfrei dicht.

Beispiel 3

Durch weitere Vergleichsversuche wurde die Haftfähigkeit der Beschichtungsmaterialien noch näher untersucht.

Für diese Versuche wurden Yoghurtgläser mit 150 cc Inhalt verwendet, deren Mündung einen Außendurchmesser von 56 mm und einen Innendurchmesser von 50 mm aufweisen, was für die Siegelung der Abdeckfolie eine Siegelfäche von 3 mm Breite ergibt.

Bei einer Gläserserie wurde die Mündung mit einer Lösung von γ-Aminopropyltriäthoxysilan und bei einer anderen Serie mit einer Lösung von polymerem Butyltitanat beschichtet, worauf der aufgetragene Film im Ofen eine Minute lang bei 160 °C getrocknet wurde.

Die in dieser Art vorbereiteten Gläser wurden mit Wasser pH 7, mit Wasser pH 1 (Ansäuerung mit Salzsäure) und mit Yoghurt abgefüllt und darauf mit einer mit Surlyn®, einem mit Metallionen neutralisierten PE-Acrylsäurecoplymeren, beschichteten Aluminiumfolie durch Heißsiegeln verschlossen.

Diese verschlossenen Gläser wurden dann in einem Autoklaven bei 40° bzw. 80 °C gelagert.

Es wurde dann im Ausgangszustand, d.h. bei nicht warm gelagerten Gläsern (Nullwert) und nach verschiedenen Lagerzeiten die Haftung der Deckfolie auf der Mündung durch Messung der zum Wegreißen der Abdeckfolie benötigte Kraft ermittelt.

Die Messergebnisse sind in der Tabelle wiedergegeben. Die aufgeführten Meßwerte sind jeweils Mittelwerte aus drei Messungen.

Bei der Beurteilung der Resultate ist zu berücksichtigen, daß infolge von herstellungsbedingten Ungenauigkeiten der Glasmündung die Breite der Siegelnaht etwas variieren kann, was zu leichten Schwankungen der Meßwerte führt.

Trotzdem zeigen die in der Tabelle aufgeführten Meßwerte, daß mit dem Butyltitanat viel bessere Resultate erreicht werden als mit dem Silan.

Die ersten Messungen wurden nach einer Lagerzeit von 8 Stunden bei 40 °C vorgenommen. Es zeigt sich dabei, daß mit der Silanbeschichtung die Glasverschlüsse schon alle undicht waren, worauf noch ein Versuch mit 2 Stunden bei 40 °C durchgeführt wurde. Bereits bei dieser Lagerzeit ist eine merkliche Verminderung der Haftfestigkeit festzustellen.

Es konnte ferner beobachtet werden, daß die Trennung bei den mit Butyltitanat vorbehandelten

3

Gläsern zwischen Metallfolie und Surlyn®-Kleber erfolgte und das Material der Siegelnaht an der Mündung des Glasbehälters haften blieb, dies selbst beim Versuch 80 °C/2 1/2 h. Hingegen erfolgte bei der Silan-Vorbehandlung die Trennung bei den gelagerten Gläsern zwischen Kleber und Glas, und zwar bei den Gläsern, die bei 40° 8 Stunden und mehr, bzw. bei 80° 3/4 Stunden und mehr gelagert wurden auf dem ganzen Mündungsumfang, wogegen bei den nicht gelagerten Gläsern sowie bei denjenigen, die 2 Stunden bei 40 °C gelagert wurden, die Trennung auf etwa der Hälfte des Umfangs zwischen Kleber und Glas und auf etwa der anderen Hälfte zwischen Kleber und Metallfolie erfolgte. Auch diese Beobachtungen zeigen, daß mit der Butyltitanat-Vorbehandlung eine bessere Haftung an der Mündung des Glasbehälters erreicht werden kann als mit Silanvorbehandlung.

### Tabelle
### Ausreissmessungen

| Lagerzeit | | T/1 | | T/2 | | T/3 | | S/1 | | S/2 | |
|---|---|---|---|---|---|---|---|---|---|---|---|
| | | A | W | A | W· | A | W | A | W | A | W |
| Nullwert | | 21 | 8 | 21 | 9.4 | 20.8 | 8.8 | 17 | 9.3 | — | — |
| 40 °C | 2 h | — | — | — | — | — | — | 12.5 | 6 | — | — |
| | 8 h | 20.6 | 8.8 | 19.3 | 9.4 | 18.6 | 10 | * | * | * | * |
| | 48 h | 22.7 | 6.3 | 21.6 | 9.4 | 18.8 | 9.4 | * | * | — | — |
| | 56 h | 21.8 | 8.8 | — | — | — | — | — | — | — | — |
| 80 °C | 3/4 h | 16.3 | 11.8 | — | — | — | — | 14.3 | 11.9 | 5* | 5* |
| | 2 1/2 h | 13.2 | 4.2 | 17.4 | 7.8 | — | — | 12.8* | 6.9* | — | — |

| Trennung zwischen Kleber und Metallfolien Kleber bleibt an der Mündung haften | Trennung meist zwischen Kleber und Glas |
|---|---|

T = Titanester  
S = Silan  
1 = Wasser pH 7  
2 = Wasser pH 1  
3 = Yoghurt

A = Anreisswert  
W = Weiterreisswert } in Newton

\* undicht  
— nicht gemessen

### Ansprüche

1. Verfahren zum Verschließen von Behältern aus Glas oder keramischen Werkstoffen mit einer Metall-, insbesondere Aluminiumfolie, die auf der dem Behälter zugekehrten Seite einen Auftrag aus unter Einwirkung von Wärme und Druck aufschmelzenden Kunststoff aufweist,
dadurch gekennzeichnet,
daß auf dem Behälterrand eine rein organische oder eine wasserhaltige organische Lösung eines monomeren oder polymeren Titansäureesters aufgebracht wird, der Auftrag getrocknet und anschließend die Verschlußfolie in an sich bekannter Weise durch Aufpressen mit Hilfe eines erwärmten Siegelkopfes auf den Gefäßrand aufgesiegelt wird.

2. Verfahren nach Anspruch 1, dadurch gekennzeichnet, daß als Lösungsmittel für den Titansäureester Benzine verwendet werden.

3. Verfahren nach Ansprüchen 1 oder 2, dadurch gekennzeichnet, daß beim Aufpressen der Verschlußfolie auf den Gefäßrand ein Siegelkopf (1) mit einer Siegelfläche aus elastischem Material verwendet wird.

4. Verfahren nach Anspruch 3, dadurch gekennzeichnet, daß als elastisches Material ein wärmeleitfähig eingestellter Silikonkautschuk verwendet wird.

5. Verfahren nach Anspruch 3 oder 4, gekennzeichnet durch ein in das elastische Material des Siegelkopfes (1) eingebettetes Heizelement (2).

6. Verfahren nach Anspruch 1, dadurch gekennzeichnet, daß als Titansäureester polymeres Butyltitanat eingesetzt wird.

7. Verfahren nach Anspruch 1 und 6, dadurch gekennzeichnet, daß als Verschlußfolie eine mit einem PE-Acrylsäurecopolymeren beschichtete Aluminiumfolie verwendet wird.

### Claims

1. Method for closing containers of glass of of ceramic materials with a metal foil, especially an

4

aluminium foil, which, on the side facing the container, has a coating of plastics which melts under the action of heat and pressure,
characterised in that
on the rim of the container a purely organic or an aqueous organic solution of a monomeric or polymeric titanic acid ester is applied, the coating is dried, and thereupon the closure foil is sealed onto the container rim in known manner by pressing on with the help of a heated sealing head.

2. Method according to claim 1, characterised in that benzine is employed as solvent for the titanic acid ester.

3. Method according to claims 1 or 2, characterised in that, in the pressing of the closure foil onto the rim of the container, a sealing head (1) is employed with a sealing surface of resilient material.

4. Method according to claim 3, characterised in that as resilient materials is used a silicone rubber modified to be heat conductive.

5. Method according to claims 3 or 4, characterised by a heating element (2) embedded in the resilient material of the sealing head (1).

6. Method according to claim 1, characterised in that polymeric butyl titanate is used as titanic acid ester.

7. Method according to claim 1 and 6, characterised in that as closure foil there is used an aluminium foil coated with a PE-acrylic acid-copolymer.

**Revendications**

1. Procédé pour la fermeture de récipients en verre ou en matériau céramique avec une feuille de métal, en particulier une feuille d'aluminium, qui présente sur la face tournée vers le récipient un enduit d'une matière plastique fondant sous l'action de la chaleur et de la pression,
caractérisé en ce que
l'on applique sur le bord du récipient une solution purement organique ou une solution organique contenant de l'eau d'un ester d'acide titanique monomère ou polymère, on sèche l'enduit et ensuite on soude de manière connue la feuille soudable sur le bord du récipient par pressage à l'aide d'une tête de soudure chauffée.

2. Procédé selon la revendication 1, caractérisé en ce que l'on utilise des essences comme solvants pour l'ester d'acide titanique.

3. Procédé selon les revendications 1 ou 2, caractérisé en ce que l'on utilise, dans le pressage de la feuille de fermeture sur le bord du récipient, une tête de soudure (1) avec une surface à souder en matière élastique.

4. Procédé selon la revendication 3, caractérisé en ce que l'on utilise comme matière élastique un caoutchouc de silicone rendu conducteur de la chaleur.

5. Procédé selon la revendication 3 ou 4, caractérisé par un élément chauffant (2) noyé dans la matière élastique de la tête de soudure (1).

6. Procédé selon la revendication 1, caractérisé en ce que l'on utilise comme ester d'acide titanique du titanate de butyle polymère.

7. Procédé selon les revendications 1 et 6, caractérisé en ce que l'on utilise comme feuille de fermeture une feuille d'aluminium enduite d'un copolymère PE-acide acrylique.

Fig. 1

Fig. 2